# EUROPEAN PATENT APPLICATION

(11) **EP 1 890 271 A1**
(43) Date of publication of application: **20.02.2008**
(21) Application number: 07113345.8
(22) Date of filing: 27.07.2007
(51) Int. Cl.: G07F 13/06, A47J 31/24

(54) **Method and device for controlling the dispensing of an infusion product for a dispensing machine**

(30) Priority: 28.07.2006 IT BO20060566
(71) Applicant: Grimac S.r.l., 40069 Zola Predosa (IT)
(72) Inventor: Mengoli, Massimo, Gramaglione 40045 (IT)
(74) Representative: Jorio, Paolo

(57) **Abstract**

Method for controlling the dispensing of an infusion product for a dispensing machine (1) provided with a percolator means (2) capable of receiving a container (4) for a product dose (5) provided with an RFID tag (14) containing information (IC, EDT, TO, PO) that identifies the said container (4) and that relates to the characteristics of the product dose (5), said method involving reading (101) the information (IC, EDT, TO, PO) from the RFID tag (14), enabling or inhibiting (102, 103, 105, 106, 107, 109, 110) dispensing of the product dose (5) from the container (4) based on the identification information (IC) of the container (4) and the expiry date (EDT) of the product dose (5), and adjusting (111, 112, 113) the dispensing of the product dose (5) on the basis of optimum dispensing parameters (TO, PO) relating to the type of infusion product.

## Description

This invention relates to a method and a device for controlling the dispensing of an infusion product for a dispensing machine.

In particular, this invention advantageously, but not exclusively, applies to controlling the dispensing of a dose of an anhydrous infusion product, such as coffee or tea, contained in a pod, to which the following description will make explicit reference although without losing its general nature.

Known coffee dispensing machines typically comprise a percolator unit capable of receiving a container, constituting a pod or capsule, containing a dose of coffee; a tank for containing the water to be dispensed to the percolator unit, a boiler controlled by a thermostat to keep the water to be dispensed to the percolator unit at a desired dispensing temperature, and a pump to push the water from the tank to the boiler, and thus to the percolator unit, at a desired dispensing pressure.

This type of machine does not allow the dispensing process to be controlled in order to optimise it or inhibit it on the basis of the characteristics of the actual product dose. In fact, different blends of coffee could require, for better percolation, different infusion temperatures and/or dispensing pressures, or they could have different expiry dates.

The aim of this invention is to provide a method and to create a device for controlling the dispensing of an infusion product for a dispensing machine, which do not have the above-mentioned drawbacks and, at the same time, are easy and economical to make.

This invention provides a method and a device for controlling the dispensing of an infusion product for a dispensing machine, a dispensing machine and a container for a dose of infusion product according to the attached claims.

This invention will now be described with reference to the accompanying drawings, which show a non-limiting embodiment thereof, in which:
- Figure 1 shows a dispensing machine comprising a device for controlling the dispensing of an infusion product according to this invention; and
- Figure 2 shows a flow chart of a method for controlling the dispensing of an infusion product used in the control device shown in Figure 1.

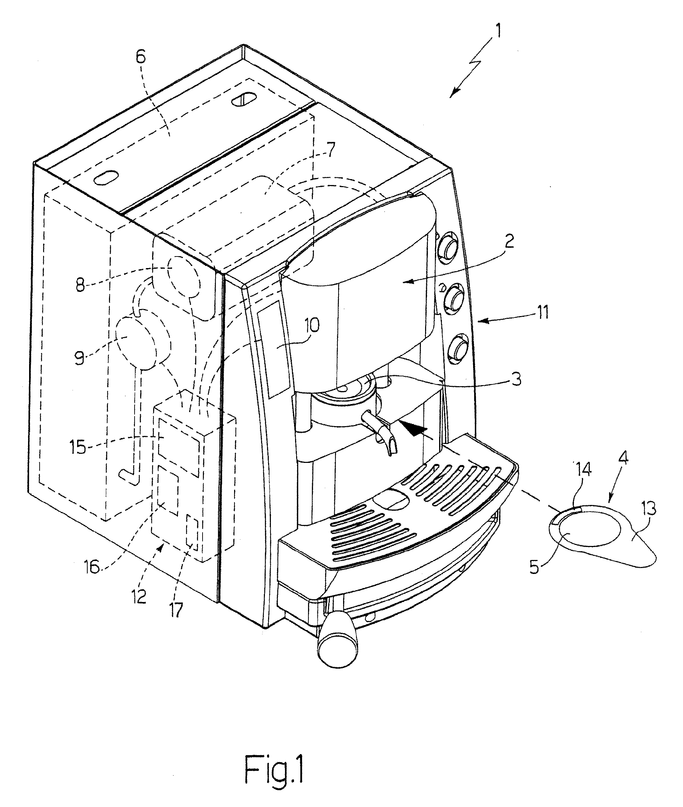

In Figure 1, 1 shows generally as a whole a machine for dispensing an anhydrous infusion product in doses.

The dispensing machine 1 comprises a percolator unit 2 of a known type capable of receiving, in its percolation cup 3, a container 4 for a product dose 5; a tank 6 to contain the water to be dispensed to the percolator unit 2; a boiler 7 controlled by a thermostat 8 to control the dispensing temperature TE of the water to the percolator unit 2; a pump 9 connected between the tank 6 and the boiler 7 to control the dispensing pressure PE of the water to the percolator unit 2; a display 10, of the liquid-crystal type for example, to display messages to a user; a push-button panel 11 to turn on the dispensing machine 1 and for the user to select the type of dispensing; and a control device 12 connected to the percolator unit 2, the thermostat 8, the pump 9, the display 10 and the push-button panel 11 to control the dispensing of the product dose 5.

In the embodiment shown in Figure 1, the container 4 comprises a pod 13 of a soft material permeable to water encompassing the product dose 5; and a respective RFID (Radio Frequency Identification) tag 14 of a known type, which is applied to the pod 13 and in which is stored information relating to the container 4 and to the product dose 5 contained therein. The RFID tag 14 is of the type that has an 8 Kbyte memory capacity and which can be excited by a radiofrequency of 13.56 MHz.

The information in the RFID tag 14 includes the type of product; the production date PDT and the expiry date EDT of the respective product dose 5; an optimum infusion temperature TO for the product; an optimum dispensing pressure PO for the product; an identity code IC for recognising the respective container 4; information on the manufacturer and on the traceability of the product; and other recommended settings of the dispensing machine 1 to enable better dispensing.

As schematically shown in Figure 1, the control device 12 comprises an RFID reader 15 of a known type capable of remotely reading the information contained in the RFID tag 14 by generating radio waves at a frequency of 13.56 MHz and using a communication protocol of the ISO 15693 type; an electronic memory 16 capable of storing information relating to several containers 4; and an internal clock 17 capable of providing the current date.

The method of controlling the dispensing of an infusion product according to this invention, first and foremost, enables the dispensing machine 1 to recognise the container 4 by storing in the memory 15 a plurality of allowable identity codes AIC associated with a respective plurality of containers 4 that can be used with the dispensing machine 1; and, when the user wishes to dispense a product dose 5, to insert the container 4 in the dispensing cup 3 of the percolator unit 2 so that the RFID tag 14 is placed at a sufficiently short distance from the RFID reader 15.

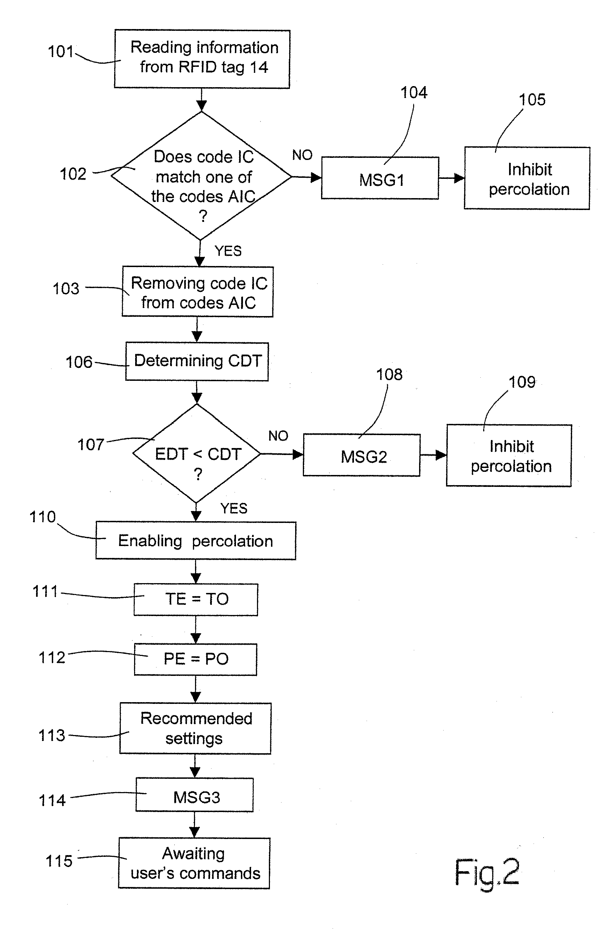

The method for controlling the dispensing of an infusion product according to this invention involves performing a series of actions implemented by the control device 12, shown in the flow chart in Figure 2 and described below.

Referring to Figure 2, the method involves reading, by means of the RFID reader 15, when the container 4 is housed in the percolator cup 3, the above-listed information contained in the RFID tag 14 of the container 4 (block 101); and subsequently to recognise the container 4.

In detail, the recognition of the container 4 involves comparing the identity code IC read with the allowable identity codes AIC stored in the memory 15 (block 102) ; if the identity code IC matches one of the allowable identity codes AIC, this identity code IC is then removed from the allowable identity codes AICs so that the relative container 4 can no longer be used by the dispensing machine 1 (block 103); otherwise, the display 10 will display an error message MSG1 which, in fact, indicates that the container 4 has an unknown provenance (block 104); and the operation of the percolator unit 2 is immediately inhibited, for example by the electrical connection being cut off by the push-button panel 11 which is involved in starting up dispensing (block 105).

If the container 4 is recognised, i.e. the relative identity code IC is recognised and eliminated, an additional comparison is made. In particular, with the aid of the clock 16, the current date CDT is determined (block 106), which is then compared to the expiry date EDT read previously (block 107); if the expiry date EDT is prior to the current date CDT, an error message MSG2 is displayed, which indicates that the product dose 5 has expired (block 108); and the operation of the percolator unit 2 is immediately inhibited (block 109); otherwise the percolator unit 2 is enabled, or the electrical connection of that part of the push-button panel 11 that concerns starting dispensing is maintained or restored (block 110).

At this point, the dispensing machine 1 is adjusted to optimise dispensing on the basis of other information read in block number 101. In particular, the dispensing temperature TE, by setting it to the optimum infusion temperature TO, is adjusted (block 111); the dispensing pressure PE is adjusted, setting it to the optimum dispensing pressure PO (block 112); and other dispensing parameters of the dispensing machine 1 are adjusted to the recommended settings read (block 113).

Lastly, the display 10 displays a message MSG3 which comprises, for example, the type of product, the manufacturer, the product traceability information, the production date PDT-, etc. (block 114); and the dispensing machine 1 is put on hold, awaiting the user's commands, ready to dispense the product dose 5 (block 115).

According to a second embodiment of this invention (not shown), the container 4 comprises a capsule of perforated rigid material and the RFID tag 14 is applied to the capsule.

According to a third and simplified embodiment of this invention (not shown), the RFID tag 14 is applied to a pack of a plurality of containers 4 of a number N containing respective product doses 5. This RFID tag 14 stores information relating to all the containers 4 contained in the pack, and in particular the respective identity codes IC and expiry dates EDT of the respective product doses 5, etc.

According to this third embodiment, the stage of reading the information contained in the RFID tag 14 (block 101) is performed before opening the pack and using the containers 4. Furthermore, in the memory 16 the number N of containers 4 contained in the pack is stored; each time that a product dose is dispensed, this number N is reduced by one unit; and the operation of the percolator unit 2 is inhibited when the number N reaches zero.

The main advantage of the above-described method for controlling the dispensing of an infusion product is to enable the dispensing machine 1 to recognise the individual product doses 5 and, consequently, to adjust or inhibit the dispensing of the product dose 5 on the basis of its identity.

Consequently, it is possible to set the dispensing parameters of the machine to optimum values for each of the different blends of coffee, or for other infusion products, such as tea, carcadé, etc.

Furthermore, it is possible to create a proprietary match between the container 4 and the dispensing machine 1 which guarantees the proper operation of the dispensing machine 1 and the quality of the infusion product used.

## Claims

1. Method for controlling the dispensing of an infusion product for a dispensing machine (1) comprising percolator means (2) capable of receiving a container (4) for a product dose (5); this method comprising the stages of:
- associating an RFID tag (14) to a respective number (N) of containers (4), the said RFID tag (14) comprising first information (IC, EDT) relating to these containers (4) and to the respective product doses (5);
- reading (101) the first information (IC, EDT) from the RFID tag (14);
- enabling (102, 103, 105, 106, 107, 109, 110) dispensing of the product dose (5) from each of these containers (4) on the basis of the first information (IC, EDT) read.

2. Method according to claim 2, in which the said first information (IC, EDT) comprises identity codes (IC), each associated respectively with one of the said containers (4); the said stage of enabling (102, 103, 105, 106, 107, 109, 110) dispensing of the product dose (5) comprising the stages of:
- recognising (102, 103) the relative container (4) by means of the respective identity code (IC); and
- if the container (4) is not recognised, inhibiting (105) the operation of the said percolating means (2).

3. Method according to claim 2 and comprising the stage of:
- memorising a plurality of allowable identity codes (AIC);
the said stage of recognising (102, 103) the container (4) comprising the stages of:
- comparing (102) the respective identity code (IC) with the allowable identity codes (AIC);
- if the identity code (IC) matches one of the allowable identity codes (AIC), removing (103) the identity code (IC).

4. Method according to claims 2 or 3, in which the said first information (IC, EDT) comprises expiry dates (EDT), each associated respectively with one of the said product doses (5); the said stage of enabling (102, 103, 105, 106, 107, 109, 110) dispensing of the product dose (5) comprising the stages of:
- determining (106) the current date (CDT);
- comparing (107) the expiry date (EDT) relating to the product dose (5) with the current date (CDT); and
- if the expiry date (EDT) is prior to the current date (CDT), inhibiting (109) the operation of the said percolating means (2).

5. Method according to claim 4, in which the said stage of enabling (102, 103, 105, 106, 107, 109, 110) dispensing of the product dose (5) comprises the stages of:
- if the relative said container (4) is recognised and the relative said expiry date (EDT) is after the said current date (CDT), enabling (110) the operation of the said percolator means (2).

6. Method according to any of the preceding claims, in which the said RFID tag (14) comprises second information (TO, PO) relating to the said infusion product; the method comprising the stages of:
- reading (101) the second information (TO, PO) from the RFID tag (14); and
- adjusting (111, 112, 113) the dispensing parameters of the product dose (5) on the basis of such second information (TO, PO).

7. Method according to claim 6, in which the said second information (TO. PO) comprises an optimum infusion temperature value (TO) for the said product; the said dispensing parameters comprising a dispensing temperature of the water (TE) to the said percolator means (2); the said stage of adjusting (111, 112, 113) the dispensing parameters comprising the stages of:
- setting (111) the dispensing temperature of the water (TE) to the optimum infusion temperature value (TO).

8. Method according to claims 6 or 7, in which the said second information (TO, PO) comprises an optimum dispensing pressure value (PO) for the said product; the said dispensing parameters comprising a dispensing pressure of the water (PE) to the said percolator means (2); the said stage of adjusting (111, 112, 113) the dispensing parameters comprising the stages of:
- setting (112) the water dispensing pressure (PE) to the optimum dispensing pressure value (PO).

9. Method according to any one of the preceding claims, in which the said number (N) of containers (4) is greater than one; the said stage of enabling (102, 103, 105, 106, 107, 109, 110) dispensing of the product dose (5) comprising the stages of:
- memorising the number (N) of containers (4);
- decreasing this number (N) of containers (4) by one unit each time a product dose (5) is dispensed; and
- if the number (N) of containers (4) reaches zero, inhibiting the operation of the said percolator means (2) .

10. A device for controlling the dispensing of an infusion product for a dispensing machine (1) comprising percolator means (2) capable of receiving a container (4) for a product dose (5); means of controlling the temperature of the water (7, 8) dispensed to the percolator means (2); and means of controlling the pressure of the water (9) dispensed to the percolator means (2); the control device (12) **being characterised in that** it comprises RFID reading means (15), electronic memorising means (16) and time measurement means (17); and **in that** it is configured to implement the method of controlling the dispensing of an infusion product according to any of the preceding claims.

11. Dispensing machine for an infusion product; the machine comprising percolator means (2) capable of receiving a container (4) for a product dose (5); means of controlling the temperature of the water (7, 8) dispensed to the percolator means (2); and means of controlling the pressure of the water (9) dispensed to the percolator means (2); the dispensing machine (1) **being characterised in that** it comprises a device (12) for controlling the dispensing of an infusion product according to the preceding claim.

12. Container for an anhydrous infusion product dose that can be used by a dispensing machine (1) of the type described in the preceding claim; the container (4) comprising an RFID tag (14), which comprises information (IC, EDT, TO, PO) relating to the said container (4) and to the product dose (5).

13. Container according to claim 12 and comprising a pod (13) of soft material permeable to water, the said RFID tag (14) being applied to the said pod (13).
